Europäisches Patentamt

European Patent Office

Office européen des brevets

(11) Numéro de publication: **0 399 904**

**A1**

(12) **DEMANDE DE BREVET EUROPEEN**

(21) Numéro de dépôt: **90401374.5**

(22) Date de dépôt: **22.05.90**

(51) Int. Cl.⁵: **B29C 49/36**

(30) Priorité: **24.05.89 FR 8906814**

(43) Date de publication de la demande:
**28.11.90 Bulletin 90/48**

(84) Etats contractants désignés:
**AT BE CH DE DK ES FR GB GR IT LI LU NL SE**

(71) Demandeur: **CMB PLASTIQUE**
**20, avenue des Sablons Bouillants**
**F-77101 Meaux Cédex(FR)**

(72) Inventeur: **Billoud, Alain**
**48 Avenue Clémenceau**
**F-77100 Meaux(FR)**

(74) Mandataire: **Obolensky, Michel et al**
**c/o CABINET LAVOIX 2, place d'Estienne d'Orves**
**F-75441 Paris Cédex 09(FR)**

(54) **Extrudeuse-souffleuse dont le moules sont protés par une roue verticale.**

(57) L'invention concerne une machine extrudeuse souffleuse possédant un bâti (L) ayant une surface d'appui (6) plane et supportant une roue (10) pouvant tourner autour de son axe (12) dans un plan vertical et munie de moules (14) sur sa périphérie, les moule étant, en fonction de leurs positions dans le plan de la roue, fermés pour créer une cavité de moulage (16) ou ouverts pour recevoir une paraison tubulaire (42), et une tête d'extrudeuse (40) située dans une zone où le moule en regard est ouvert et destinée à fournir ladite paraison (42) selon une direction (F) inclinée par rapport à la surface d'appui (6) et vers le bas, la machine comportant un support (60 ; 70 ; 80) possédant un plan incliné (P) par rapport à l'horizontale et supportant la surface d'appui (6), le plan incliné (P) formant avec un plan horizontal un angle aigu (b) à peu près égal à 90° diminué de l'angle aigu (a) que forme la direction (F) de la paraison (42) avec la surface d'appui (6) de façon que la direction (F) de la paraison (42) soit à peu près verticale.

FIG.2

EP 0 399 904 A1

La présente invention concerne une extrudeuse souffleuse destinée à fabriquer des corps creux tels que flacons, bouteilles, etc en matière plastique.

On connait de telles machines, par exemple les machines connues sont le nom de machines Mills. De telles machines mettent en oeuvre un procédé de fabrication tel que décrit dans les brevets FR-A-1.020.377 et US-A-2.579.390.

De telles machines ont pour particularité d'utiliser un grand nombre de moules (treize ou quatorze par exemple) avec une extrudeuse débitant une paraison de matière plastique fondue.

Les moules sont disposés bout à bout à la périphérie d'une roue qui tourne dans un sens déterminé dans un plan vertical et selon un mouvement uniforme.

Les moules sont constitués d'un demi-moule intérieur fixé à la périphérie de la roue et d'un demi-moule extérieur situé en vis-à-vis de ce dernier et monté coulissant radialement sur la roue. Une came entoure la périphérie de la roue et entraine selon sa position dans le plan de la roue, le demi-moule extérieur entre une position ouverte dans laquelle il est écarté du demi-moule intérieur et une position fermée dans laquelle il est serré contre le demi-moule intérieur pour former une cavité de moulage.

Une tête d'extrudeuse est située dans une zone où un moule est ouvert et débite une paraison tubulaire de matière plastique fondue, selon une direction inclinée par rapport à la surface d'appui horizontale de la machine. La direction de la paraison est telle que par rotation un des demi-moules intérieur vient se positionner de façon telle que son plan de joint avec le demi-moule extérieur entre en contact avec la paraison. Dans cette position la paraison repose par ses extrémités sur les parois extrêmes du demi-moule intérieur et possède une zone centrale sans appui située à travers la cavité.

Dans cette position la paraison doit rester rectiligne pour permettre un soufflage correct et la formation d'un corps creux acceptable.

Il s'avère qu'avec des matières plastiques ayant une faible viscosité à l'état fondu telles que le polyéthylène téréphtalate, la paraison fléchit dans sa zone centrale et ne permet pas un soufflage régulier fournissant une paroi de flacon d'épaisseur constante. Le fléchissement peut entrainer un bouchage de la paraison tubulaire qui ne permet plus d'obtenir un flacon ayant une paroi conforme à celle de la cavité.

Pour remédier à cet inconvénient la présente invention a pour but de fournir une extrudeuse souffleuse qui évite le fléchissement de la paraison lorsqu elle est en contact avec le demi-moule intérieur.

A cet effet l'invention a pour objet une machine extrudeuse souffleuse possédant un bâti ayant une surface d'appui plane et supportant une roue pouvant tourner autour de son axe dans un plan vertical et muni de moules à sa périphérie, les moules étant, en fonction de leurs positions angulaires dans Ce plan de la roue, fermés pour créer une cavité de moulage ou ouverts pour recevoir une paraison tubulaire, et une tête d'extrudeuse située dans une zone où le moule en regard est ouvert et destiné à fournir ladite paraison selon une direction inclinée par rapport à la surface d appui et vers le bas, caractérisée en ce qu'elle comporte un support possédant un plan incliné par rapport à l'horizontale et supportant la surface d'appui, le plan incliné formant avec un plan horizontal un angle aigu (b) à peu près égal à 90° diminué de l'angle aigu (a) que forme la direction de la paraison avec la surface d appui de façon que la direction de la paraison soit à peu près verticale.

Selon d'autres caractéristiques :
- le plan incliné est constitué par une face supérieure d'un coin dont la face inférieure horizontale est en appui sur le sol ;
- le plan incliné est une plaque support montée pivotante autour d'un axe horizontal parallèle à l'axe de la roue, des moyens de commande de l'inclinaison étant prévus pour coopérer avec la plaque support ;
- la plaque support est montée pivotante sur une plaque de base et les moyens de commande de l'inclinaison sont constitués d'un vérin téléscopique prenant appui sur la plaque de base ;
- le plan incliné est une plaque support montée pivotante sur un pied autour d'un axe horizontal parallèle à l'axe de la roue, des cales de maintien en position inclinée de la plaque support étant situées de part et d'autre du pied central, entre le sol et le dessous de la plaque support ;
- le support est amovible.

La présente invention sera mieux comprise à l'aide de la description qui va suivre. faite en référence aux dessins annexés sur lesquels :
- La figure 1 représente schématiquement une extrudeuse souffleuse selon la technique antérieure ;
- la figure 2 représente un premier mode de réalisation d une machine selon l'invention ;
- la figure 3 représente un deuxième mode de réalisation d'une machine selon l'invention ;
- la figure 4 représente un troisième mode de réalisation d'une machine selon l'invention.

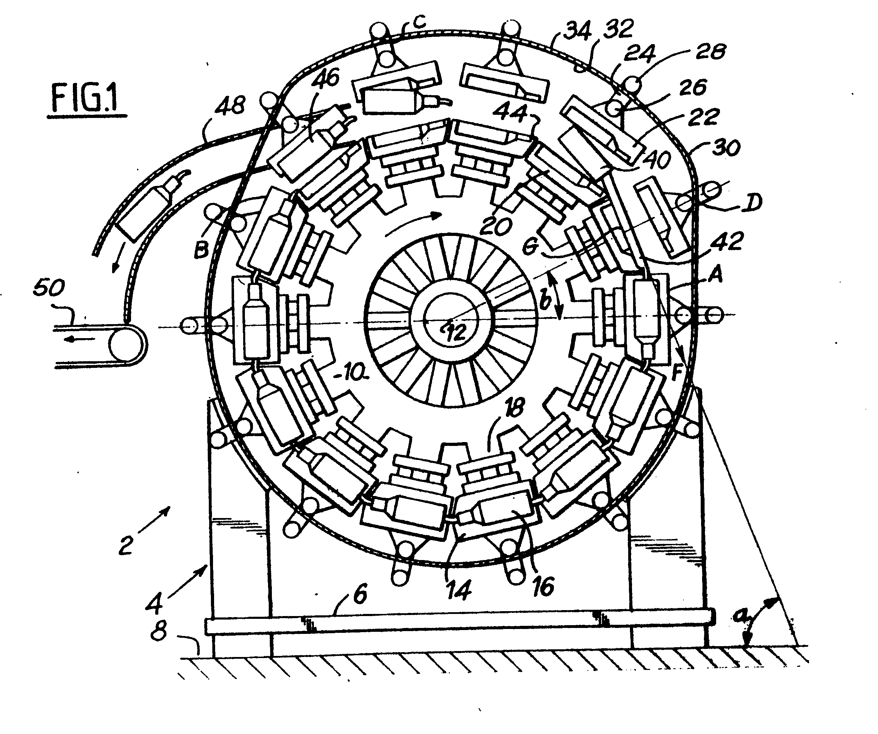

Sur la figure 1 on a représenté une machine extrudeuse souffleuse destinée à la réalisation de corps creux en matière plastique selon la technologie antérieure. La machine 2 comporte un bâti 4 reposant sur le sol 8 par une surface d'appui 6 horizontale.

Une roue 10 est montée sur le bâti 4 de manière à pouvoir tourner autour d'un axe horizontal 12, perpendiculaire au plan de la roue 10, dans le sens des aiguilles d'une montre sur la figure 1.

Des moules 14 sont situés bout à bout à la périphérie de la roue. Chaque moule forme une cavité 16 de moulage allongée s'étendant de manière générale perpendiculairement au rayon 18 de la roue à l'extrémité duquel est fixé le moule.

Chaque moule 14 est constitué d'un demi-moule intérieur 20 fixé à demeure sur son rayon 18 et d'un demi-moule extérieur 22 monté coulissant axialement sur le rayon 18. A cet effet le demi-moule extérieur est solidaire d'un bras 24 monté coulissant axialement sur le rayon 18 et comportant un galet intérieur 26 et un galet extérieur 28 situés de part et d'autre d'une came double 30.

La came 30 est constituée d'une bande continue entourant la périphérie de la roue, espacée de celle-ci, et dont les faces intérieure et extérieure s'étendent perpendiculairement au plan de la roue pour constituer des chemins de cames intérieur 32 et extérieur 34 destinés à coopérer avec les galets 26 et 28 respectivement.

Le profil de la came 30 comporte quatre zones :

- une zone A-B dans laquelle les galets 26 coopèrent avec le chemin 32 pour maintenir les moules 14 fermés,
- une zone B-C dans laquelle les galets 28 coopèrent avec le chemin 34 pour ouvrir les moules,
- une zone C-D d'acheminement des moules entièrement ouverts, et
- une zone D-A de fermeture des moules.

Une extrudeuse (non représentée) possède une tête d'extrusion 40 située à proximité du point D entre les deux demi-moules ouverts.

Une paraison 42 tubulaire à peu près rectiligne de matière plastique à l'état fondu sort de la tête 40 selon une direction F faisant un angle aigu "a" avec la surface d'appui 6.

La direction F et le plan de joint 44 du demi-moule 20 situé en vis-à-vis du point D de la came 30 sont parallèles. Le point D est situé radialement au-dessus du plan diamétral horiritntàl de la roue et de manière telle qu'un rayon passant par le point D et perpendiculaire à F forme un angle aigu "b" avec celui-ci. L'angle "b" est égal à 90° moins l'angle "a".

La génératrice G la plus intérieure de la paraison tubulaire 42 est au contact du plan de joint 44 dans un plan médian du demi-moule 20 en vis-à-vis du point D, c'est-à-dire que la paraison 42 repose sur les parois avant et arrière de ce demi-moule.

La rotation de ce demi-moule 20 entraine la fermeture de celui-ci sur la paraison 42 qui est alors située dans la cavité 16 du moule, puis provoque le soufflage de manière connue de la paraison (dans la zone A-B).

Le soufflage permet de réaliser un récipient creux (46) qui est ensuite entrainé dans une goulotte (48) d'évacuation (zone C-D) vers un convoyeur (50) destiné à le transporter jusqu'à un autre poste de travail (non représenté).

Lorsque la paraison 42 est composée d'une matière plastique à faible viscosité à l'état fondu, il s'avère que la paraison 42 fléchit et s'incurve vers l'intérieur de la cavité du demi-moule 20 lors de la rotation de celui-ci entre D et A ce qui ne permet pas un soufflage convenable.

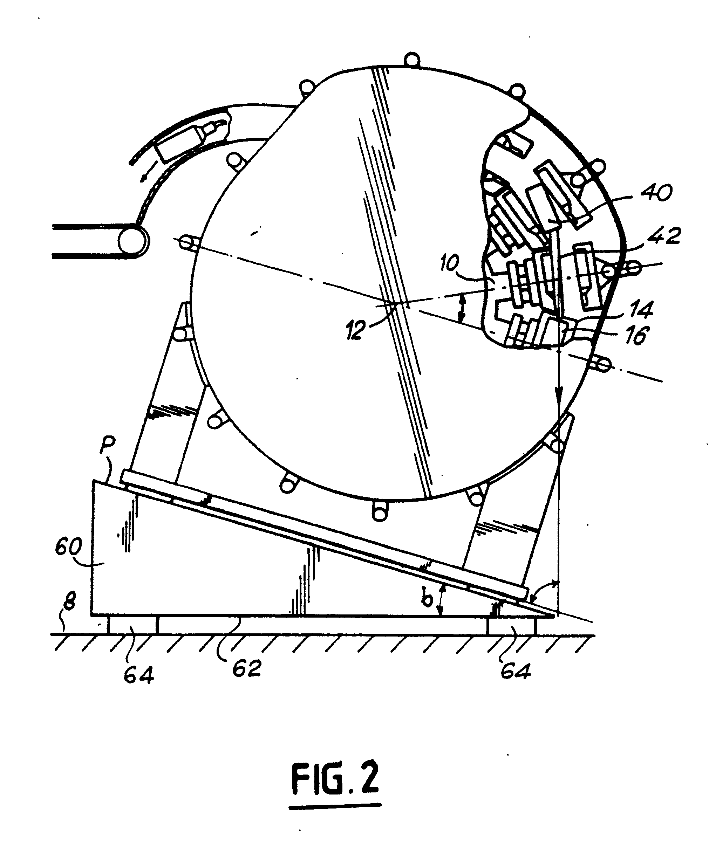

Les figures 2 à 4 représentent trois modes de réalisation d'une machine selon l'invention qui élimine cet inconvénient.

Les références numériques des éléments communs à la Figure 1 et aux figures 2 à 4 ont été gardées dans la suit de la description.

Comme on le constate sur la figure 2, une machine selon l'invention est composée d'une machine telle que décrite ci-dessus et comporte en outre un support incliné 60.

Le support 60 est constitué d'un coin possédant une base 62 horizontale supportée par des plots de calage 64 reposant sur le sol 8.

Le coin comporte un plan incliné P faisant l'angle aigu "b" précédemment défini avec la base 62, l'intersection du plan P avec la base 62 étant parallèle à l'axe 12 de la roue 10, et le coin étant disposé de façon que la direction F de la paraison 42 soit à peu près verticale.

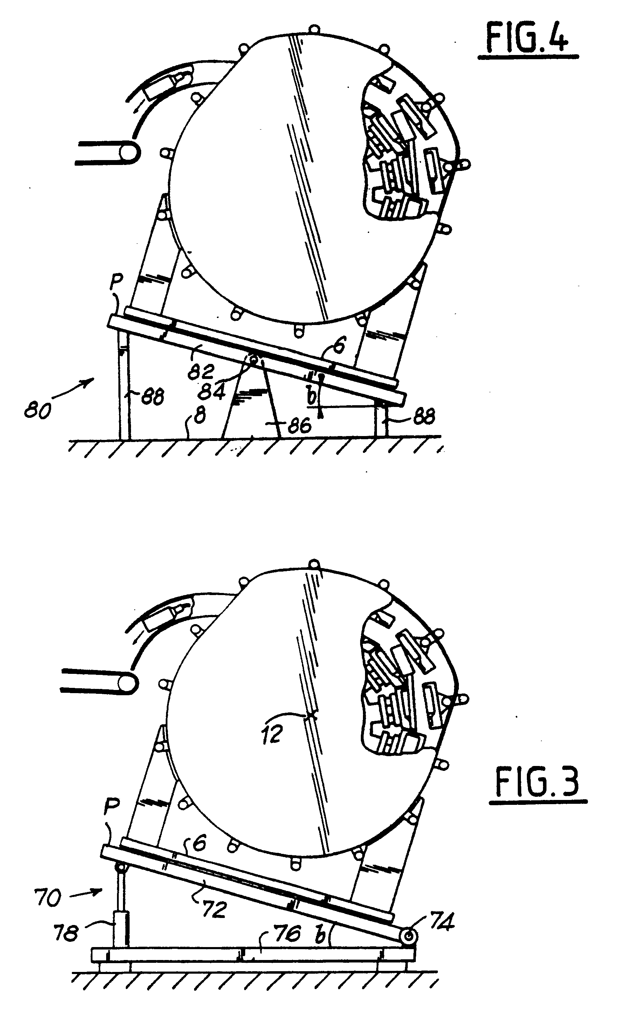

Sur la figure 3 on a représenté un deuxième mode de réalisation d'une machine selon l'invention, dans lequel le support de la machine est différent.

Le support 70 de la figure 3 comporte une plaque support 72 montée pivotante autour d'un axe 74 parallèle à l'axe 12 de la roue, sur une plaque de base 76. La surface d'appui 6 repose sur la face supérieure de la plaque support 72.

La plaque de base 76 est horizontale et repose sur le sol à l'aide de cales de réglage.

Entre les plaques 72 et 76, et à proximité de l'extrémité de celle-ci opposée à l'axe 74 de pivotement, sont prévus des moyens de commande de l'inclinaison de la plaque 72 par rapport à la plaque de base 76.

A cet effet un vérin télescopique 78 prend appui sur la plaque 76 et commande le pivotement de la plaque 72 pour que l'angle entre cette dernière et un plan horizontal soit égal à l'angle "b" précédemment défini.

Sur la figure 4 on a décrit un troisième mode de réalisation d'une machine selon l'invention dans laquelle le support 80 est constitué d'une plaque support 82 sur laquelle repose la surface d'appui 6 de la machine.

La plaque 82 est montée pivotante autour d'un axe 84 sur un pied 86. L'axe 84 est horizontal et parallèle à l'axe de rotation de la roue de la machine.

Le pied 86 possède une section à peu près trapézoïdale, la base du trapèze reposant sur le sol 8. Le pied 86 s'étend perpendiculairement au plan de la roue. Entre le sol 8 et la face inférieure de la plaque support 82 sont disposées des cales 88 de maintien en position inclinée de la plaque support 82. Les cales 88 assurent que l'angle aigu que forme la plaque 82 avec un plan horizontal est égal à l'angle "b" précédemment défini.

Dans les trois modes de réalisation de la machine selon l'invention, la paraison 42 a une direction verticale. Lorsque cette paraison vient au contact du plan de joint du demi-moule intérieur, elle n'est plus en appui sur les parois de ce demi-moule, ce qui supprime tout risque de fléchissement de celle-ci et permet un soufflage correct lorsque le moule est entraîné en rotation vers une position de soufflage.

Ceci permet de réaliser de manière convenable des flacons creux en matière plastique à faible viscosité à l'état fondu, telle que notamment le polyéthylène téréphtalate.

**Revendications**

1. Machine extrudeuse souffleuse possédant un bâti (4) ayant une surface d'appui (6) plane et supportant une roue (10) pouvant tourner autour de son axe (12) dans un plan vertical et munie de moules (14) sur sa périphérie, les moules étant, en fonction de leurs positions dans le plan de la roue, fermés pour créer une cavité de moulage (16) ou ouverts pour recevoir une paraison tubulaire (42), et une tête d'extrudeuse (40) située dans une zone où le moule en regard est ouvert et destinée à fournir ladite paraison (42) selon une direction (F) inclinée par rapport à la surface d'appui (6) et vers le bas, caractérisée en ce qu'elle comporte un support (60 ; 70 ; 80) possédant un plan incliné (P) par rapport à l'horizontale et supportant la surface d'appui (6), le plan incliné (P) formant avec un plan horizontal un angle aigu (b) à peu près égal à 90° diminué de l'angle aigu (a) que forme la direction (F) de la paraison (42) avec la surface d'appui (6) de façon que la direction (F) de la paraison (42) soit à peu près verticale.

2. Machine selon la revendication 1 caractérisée en ce que le plan incliné (P) est constitué par une face supérieure d'un coin (60) dont la face inférieure horizontale (62) est en appui sur le sol (8).

3. Machine selon la revendication 1 caractérisée en ce que le plan incliné (P) est une plaque support (72) montée pivotante autour d'un axe horizontal (74) parallèle à l'axe de la roue, des moyens de commande de l'inclinaison (78) étant prévus pour coopérer avec la plaque support.

4. Machine selon la revendication 3 caractérisée en ce que la plaque support (72) est montée pivotante sur une plaque de base (76) et les moyens de commande (78) de l'inclinaison sont constitués d'un vérin téléscopique prenant appui sur la plaque de base (76).

5. Machine selon la revendication 1, caractérisée en ce que le plan incliné (P) est une plaque support (82) montée pivotante sur un pied (86) autour d'un axe horizontal (84) parallèle à l'axe de la roue, des cales (88) de maintien en position inclinée de la plaque support (82) étant situées de part et d'autre du pied central, entre le sol et le dessous de la plaque support (82).

6. Machine selon l'une quelconque des revendications précédentes, caractérisée en ce que le support est amovible.

FIG.1

# FIG.2

EP 0 399 904 A1

FIG.4

P
82
84
80
88
8
86
88

FIG.3

12

P
6
70
72
78
76 b
74

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 334 379 (A. DI SETTEMBRINI) * Colonne 4, lignes 16-45; figures 1,5 * --- | 1-6 | B 29 C 49/36 |
| A | US-A-4 197 071 (R. SALLE et al.) --- | | |
| A | US-A-2 579 399 (H.S. RUEKBERG) --- | | |
| A | US-A-4 569 651 (T.J. KRALL) --- | | |
| A | US-A-3 764 250 (W.C. WATERLOO) --- | | |
| A,D | US-A-2 579 390 (E.E. MILLS) ----- | | |

**DOMAINES TECHNIQUES RECHERCHES (Int. Cl.5)**

B 29 C

Le présent rapport a été établi pour toutes les revendications

| Lieu de la recherche | Date d'achèvement de la recherche | Examinateur |
|---|---|---|
| LA HAYE | 21-08-1990 | SZAMOCKI G.J.A. |